Europäisches Patentamt

European Patent Office

Office européen des brevets

(19)

(11) Veröffentlichungsnummer: **0 159 394**
**B1**

# (12) EUROPÄISCHE PATENTSCHRIFT

(45) Veröffentlichungstag der Patentschrift:
01.06.88

(51) Int. Cl.⁴: **B 60 P 7/08**

(21) Anmeldenummer: **84110933.3**

(22) Anmeldetag: **13.09.84**

(54) **Zurrschiene zum Befestigen von Ladegut auf Fahrzeugen.**

(30) Priorität: **14.09.83 DE 8326465 U**

(43) Veröffentlichungstag der Anmeldung:
**30.10.85 Patentblatt 85/44**

(45) Bekanntmachung des Hinweises auf die Patenterteilung:
**01.06.88 Patentblatt 88/22**

(84) Benannte Vertragsstaaten:
**AT DE FR GB NL SE**

(56) Entgegenhaltungen:
**DE - A - 2 111 360**
**DE - A - 3 046 250**
**US - A - 3 399 635**

(73) Patentinhaber: **ANCRA Jungfalk GmbH,**
**Richard-Stocker-Strasse 19, D-7707 Engen (DE)**

(72) Erfinder: **Koller, Karl, Dipl.-HTL, Furkastrasse 11,**
**CH-8203 Schaffhausen (CH)**

(74) Vertreter: **Hlebsch, Gerhard F., Dipl.-Ing.,**
**Erzbergerstrasse 5A Postfach 464, D-7700 Singen 1 (DE)**

ACTORUM AG

## Beschreibung

Die Erfindung betrifft eine Vorrichtung zum Verzurren bzw. Festlegen von auf einer Ladefläche angeordneten Ladegütern od. dgl. mit einer Profilschiene, insbesondere aus Leichtmetall, für den Einbau in Fahrzeugladeräume oder Container als Gleitbahn für ein an der Profilschiene verschiebbares und als Klemmschloss ausgebildetes Halteorgan, wobei die Profilschiene eine Gleitbahn für einen Schlitten des Klemmschlosses sowie wenigstens eine Führungsfläche für einen diese hintergreifenden Führungsstreifen des Klemmschlosses aufweist, in dessen Schliessstellung der Führungsstreifen durch eine Exzenterscheibe bzw. deren gekrümmte Schliesskante an der Führungsfläche festgelegt ist.

Bei einer derartigen Vorrichtung liegt nach DE-A-2 111 360 die Exzenterscheibe in Schliessstellung der Profilschiene an; die Paarung dieser beiden Vorrichtungsteile führt zu Verschleissanfälligkeit und erlaubt nur bedingt eine feste Verbindung.

So hat sich der Erfinder das Ziel gesetzt, die eingangs beschriebene Vorrichtung hinsichtlich ihrer Funktionsweise und der Verschleissanfälligkeit der Paarung Profilschiene/Exzenterscheibe unter Meidung der erkannten Mängel zu verbessern.

Zur Lösung dieser Aufgabe weist der Schlitten einen Durchbruch für einen der Exzenterscheibe zugeordneten Riegeleinsatz auf, der aus einem in den Durchbruch eingesetzten Druckteil und einem in die Bewegungsbahn der Exzenterscheibe ragenden Oberteil besteht. In bevorzugter Ausgestaltung ist der Durchbruch als Mittelschlitz im Quersteg des Schlittens ausgebildet.

Der Riegelansatz befindet sich in seiner Ruhelage mit jenem Druckteil lose im Durchbruch; diesem Druckteil ist erfindungsgemäss das Oberteil angeformt, das als Anschlag die Kanten des Durchbruches oder Mittelschlitzes übergreift.

Im Rahmen der bevorzugten Ausgestaltung liegt auch die Verbesserung der Funktionsweise durch die Vereinfachung des Aufbringens des Klemmschlosses auf seine Profilschiene.

Die Vereinfachung besteht nun darin, dass die innere Weite des Schlittens um ein Mass grösser ist als der Abstand zwischen den von ihm umgriffenen Längskanten der Profilschiene, welches ein Spiel zum seitlichen Abheben des Klemmschlosses erlaubt. Der ansonsten bestehende Zwang, das Klemmschloss auf die Profilschiene in Längsrichtung aufzuschieben, entfällt.

Die Einbauebene der Profilschiene ist erfindungsgemäss von Schenkeln zweier mit dem Mittelstreifen einstückiger und voneinander weg gerichteter Winkelstücke bestimmt; beide Schenkel jedes Winkelstückes begrenzen eine Seitennut, welche einerseits von der Führungsfläche begrenzt ist.

Die Exzenterscheibe ist nach dem vorstehend genannten Stand der Technik Teil eines Arretierhebels und mit diesem zwischen Sockelstegen von Winkel- oder U-Profilen des Schlittens geführt. Diese Details werden nun erfindungsgemäss noch dadurch verbessert, dass die Sockelstege stirnseitig durch Anformungen oder Zungen verbunden sind und so eine kompaktere Bauweise anbieten.

Weitere Vorteile, bevorzugte Merkmale und Einzelheiten der Erfindung ergeben sich aus der nachfolgenden Beschreibung bevorzugter Ausführungsbeispiele sowie anhand der Zeichnung; diese zeigt in:

Fig. 1: einen Blick in den teilweise wiedergegebenen Kastenaufbau eines Lastwagens mit Profilschiene;

Fig. 2: die vergrösserte Draufsicht auf einen Teil der Profilschiene nach Fig. 1 mit dieser zugeordnetem, teilweise geschnittenem Klemmschloss als Beschlag;

Fig. 3: eine Seitenansicht zu Fig. 2, teilweise nach deren Linie Q geschnitten;

Fig. 4: einen Schnitt durch Fig. 2 nach deren Linie IV–V mit dem in Rastlage wiedergegebenen Beschlag;

Fig. 5: eine der Fig. 4 entsprechende Wiedergabe des Klemmschlosses in dessen Schliessstellung;

Fig. 6: eine Schrägsicht auf ein geschnittenes Detail der Fig. 2 bis 5;

Fig. 7: ein weiteres Ausführungsbeispiel des Beschlages in einer der Fig. 4 entsprechenden Wiedergabe;

Fig. 8: die Teile der Fig. 7 in anderer Gebrauchsstellung.

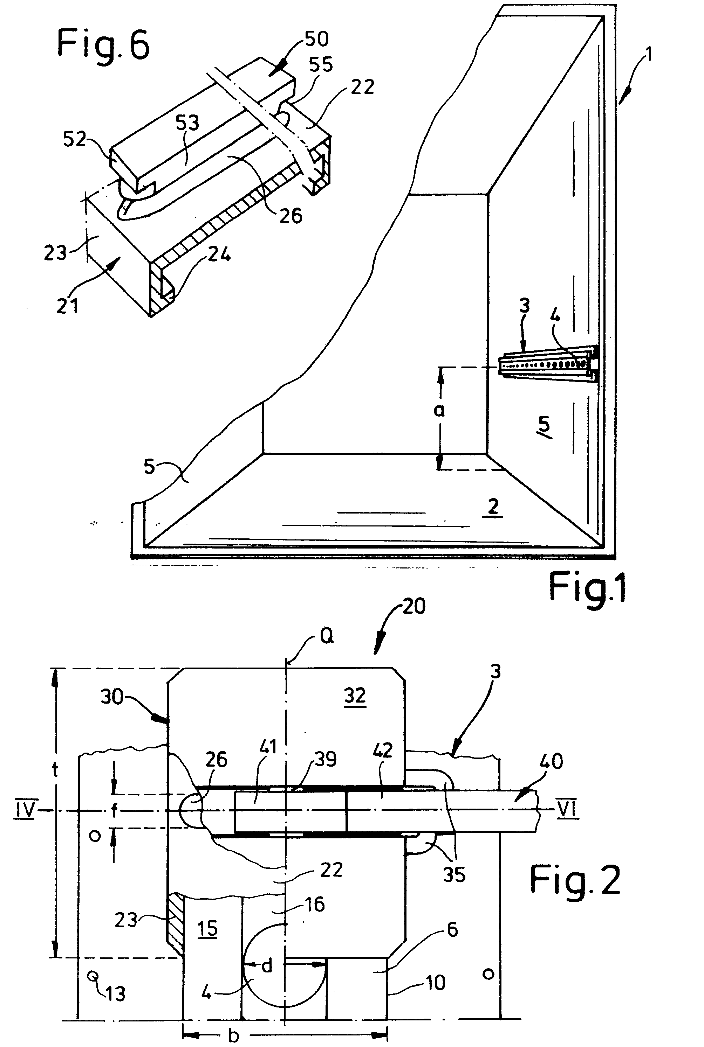

In einem Kastenaufbau 1 eines nicht weiter dargestellten Lastwagens ist in einem Abstand a von dessen Ladefläche 2 in einer zu ihr parallelen Profilschiene 3 eine Reihe von Bohrungen 4 eines Durchmessers d von 20 mm erkennbar. Diese Profilschiene 3 sitzt an einer Seitenwand 5 des Kastenaufbaus 1 – ihr liegt eine in Fig. 1 nicht gezeigte gleichartige Profilschiene 3 gegenüber.

Als Profilschiene 3 dient ein Strangpressprofil aus Leichtmetall mit einem jene Bohrungen 4 aufweisenden Mittelstreifen 6 einer Breite b von – im gewählten Ausführungsbeispiel – 50 mm, an dessen Unterseite 7 beidseits der Profilachse M jeweils ein Winkelstück 8 angeformt ist. Der kurze Schenkel 9 jenes Winkelstücks 8 begrenzt in einem etwa 8 mm messenden Abstand e von einer Längskante 10 des Mittelstreifens 6 eine Schulterfläche 11 der Mittelstückunterseite 7, während der lange Winkelschenkel 12 parallel zur Unterseite 7 nach aussen verläuft und seinerseits mit Bohrungen 13 für nicht wiedergegebene Befestigungsschrauben versehen ist. In die Oberfläche 15 des Mittelstreifens 6 ist gemäss Fig. 2 eine Längsnut 16 eingebracht, beidseits deren somit Gleitstreifen 17 entstehen.

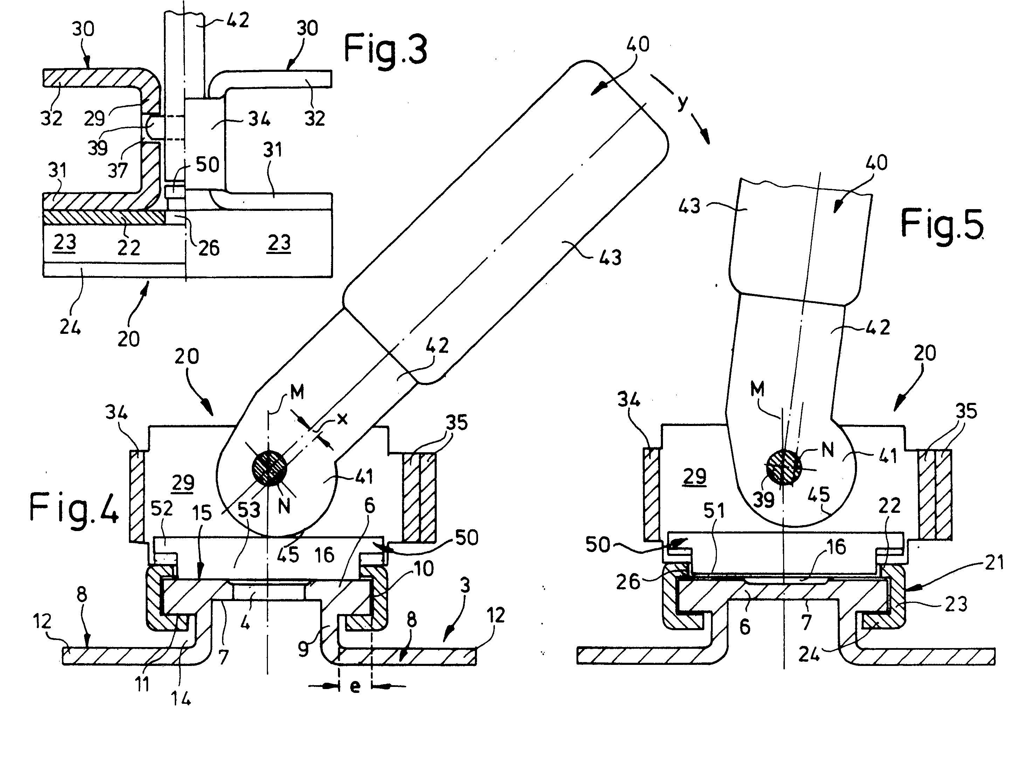

Auf jenem Mittelstreifen 6 gleitet gemäss Fig. 2 bis 6 ein Klemmschloss 20 mit Schlitten 21 einer Länge t von hier 50 mm. Letzterer besteht aus einem der Oberfläche 15 des Mittelstreifens 6 anliegenden Quersteg 22, beidseits davon rechtwinklig ausgehenden Profilschenkeln 23 und von jedem dieser Profilschenkel 23 nach innen ragenden Führungsstreifen 24 (Fig. 5); letztere unter-

greifen jene Schulterfläche 11 zur Führung des Schlittens entlang der Längskanten 10 des Mittelstreifens 6; die Schulterfläche 11 begrenzt so eine Seitennut 14 für den Führungsstreifen 24.

Quer zur Schlittenlängsachse Q verläuft im Quersteg 22 ein Mittelschlitz 26 einer Breite f von 10 mm. Beidseits dieses Mittelschlitzes 26 ragen vom Quersteg 22 des Schlittens 21 Sockelstege 29 zweier liegender U-Profile 30 auf, deren einer Schenkel 31 mit jenem Quersteg 22 des Schlittens 21 fest verbunden ist und deren anderer Schenkel 32 parallel abragt. Beide U-Profile 30 sind – beidseits des Mittelschlitzes 26 – durch klammerartige Anformungen 34 oder zueinandergebogene Zungen 35 verbunden.

Die beiden Sockelstege 29 nehmen in Achslöchern 37 einen Achsbolzen 39 eines Arretierhebels 40 auf; letzterer besteht aus einer Lagerscheibe 41 mit anschliessendem Hebelarm 42 aus Flacheisen sowie einem Griffstück 43 aus Kunststoff.

Insbesondere Fig. 4, 5 lassen erkennen, dass jene Lagerscheibe 41 um ein Mass x zum Achsbolzen 39 exzentrisch gelagert ist, so dass beim Schwenken des Griffstückes 43 in Schliessrichtung y eine um einen Mittelpunkt N gekrümmte Schliesskante 45 einen Riegeleinsatz 50 aus einer in Fig. 5 dargestellten Ruhelage in eine Schliessstellung nach Fig. 4 drückt, in welcher die Unterfläche 51 der Oberfläche 15 des Mittelstreifens 6 von Profilschiene 3 aufsitzt.

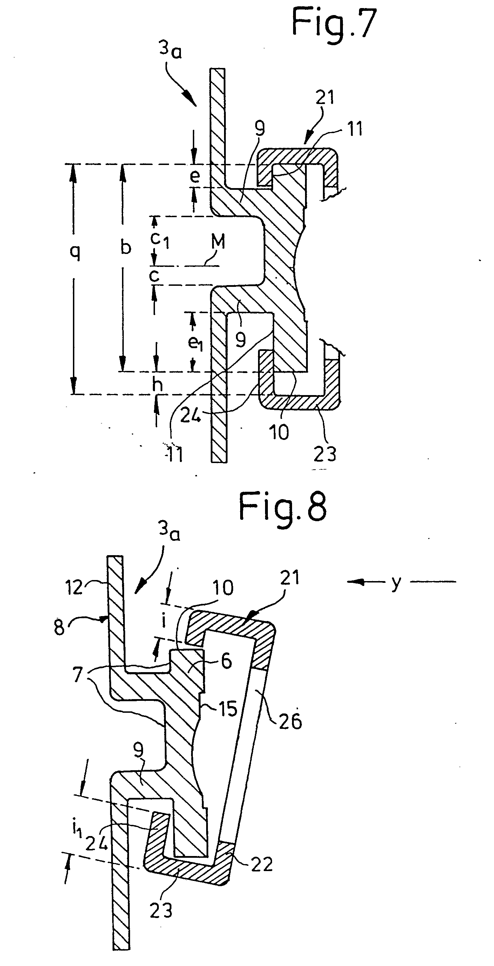

Der Riegeleinsatz 50 ist in Fig. 6 deutlich wiedergegeben und besteht aus einem streifenförmigen Oberteil 52 sowie einem diesem gegenüber kürzeren – damit einstückigen – Druckteil 53. Dieser ist der Kontur des Mittelschlitzes 26 angepasst und kann durch diesen auf den Mittelstreifen 6 aufgesetzt werden, während die Stirnbereiche 55 jenes Oberteils 52 als Sicherungsanschlag oberhalb des Mittelstreifens 6 verbleiben.

Auf diese Weise ergibt sich ein Klemmschloss 20, welches stufenlos an der Profilschiene 3 festgelegt werden kann; deren Bohrungen 4 dienen zur abgestuften Festlegung von Zurrelementen für in der Zeichnung aus Gründen der Übersichtlichkeit nicht dargestellte Ladegüter.

Die zu Fig. 4 beschriebenen Abstände zwischen der Aussenseite des kurzen Winkelschenkels 9 und der Längskante 10 des Mittelstreifens 6 sind in Fig. 7, 8 von ungleicher Länge ($e_1 = 3 \times e$), d. h., die Mittelachse M der hier verwendeten Profilschiene $3_a$ verläuft in unterschiedlichen Abständen $c$, $c_1$ zu den Winkelschenkeln 9 (Fig. 7).

Auch die Führungsstreifen 24 an den Profilschenkeln 23 sind von ungleicher Länge $i$, $i_1$. Da die Breite b des Mittelstreifens 6 der Profil- oder Zurrschiene $3_a$ hier nun ein Mass h kürzer ist als die innere Weite q des Schlittens 21, kann letzterer dank des so entstehenden Spiels gemäss Fig. 8 seitlich abgehoben werden (Pfeil y).

## Patentansprüche

1. Vorrichtung zum Verzurren bzw. Festlegen von auf einer Ladefläche angeordneten Ladegütern od. dgl. mit einer Profilschiene (3), insbesondere aus Leichtmetall, für den Einbau in Fahrzeugladeräume oder Container als Gleitbahn für ein an der Profilschiene verschiebbares und als Klemmschloss (20) ausgebildetes Halteorgan, wobei die Profilschiene eine Gleitbahn (15) für einen Schlitten (21) des Klemmschlosses (20) sowie wenigstens eine Führungsfläche (11) für einen diese hintergreifenden Führungsstreifen (24) des Klemmschlosses (20) aufweist, in dessen Schliessstellung der an einen U-förmigen Querschnitt des Schlittens (21) angesetzte Führungsstreifen durch eine Exzenterscheibe (41) bzw. deren gekrümmte Schliesskante (45) an der Führungsfläche (11) festgelegt ist, dadurch gekennzeichnet, dass der Schlitten einen Durchbruch (26) für einen der Exzenterscheibe (41) zugeordneten Riegeleinsatz (50) aufweist, der aus einem in den Durchbruch (26) eingesetzten Druckteil (53) und einem in die Bewegungsbahn der Exzenterscheibe (41) ragenden Oberteil (52) besteht.

2. Vorrichtung nach Anspruch 1, dadurch gekennzeichnet, dass der Durchbruch (26) als Mittelschlitz im Quersteg (22) des Schlittens (21) ausgebildet ist.

3. Vorrichtung nach Anspruch 1, dadurch gekennzeichnet, dass der Oberteil (52) des Riegeleinsatzes (50) teilweise die Kante des Durchbruches (26) übergreift und diese Kante übergreifende Bereiche des Oberteils (52) in Schliessstellung des Klemmschlosses (20) auf dem Quersteg (22) des Schlittens (21) aufsitzen.

4. Vorrichtung nach einem der Ansprüche 1 bis 3, dadurch gekennzeichnet, dass die innere Weite (q) des Schlittens (21) um ein Mass (h) grösser ist als der Abstand (b) zwischen den von ihm umgriffenen Längskanten (10) der Profilschiene ($3_a$), welches ein Spiel zum seitlichen Abheben des Klemmschlosses (60) erlaubt.

5. Vorrichtung nach einem der Ansprüche 1 bis 4, dadurch gekennzeichnet, dass die Einbauebene der Profilschiene (3, $3_a$) von Schenkeln (12) zweier mit dem Mittelstreifen (6) einstückiger und voneinander weg gerichteter Winkelstücke (8) bestimmt ist und beide Schenkel (9, 12) jedes Winkelstückes eine Seitennut (14) begrenzen, welche einerseits von der Führungsfläche (11) begrenzt ist.

6. Vorrichtung nach wenigstens einem der Ansprüche 1 bis 5, bei der die Exzenterscheibe (41) Teil eines Arretierhebels (40) und mit diesem zwischen Sockelstegen (29) von Winkel- oder U-Profilen (30) des Schlittens (31) geführt ist, dadurch gekennzeichnet, dass die Sockelstege (29) stirnseitig durch Anformungen (34) oder Zungen (35) verbunden sind.

## Claims

1. A device for lashing or securing merchandise or the like arranged on a loading area having a sectional rail (3), especially of light alloy, for the assembly in vehicle cargo space or in containers as guideway for a holding device movable on the sectional rail and developed as clamping lock (20), the sectional rail having a guideway (15) for a slide

(21) of the clamping lock (20) and at least one giude surface (11) for a guide strip (24) of the clamping lock (20) holding the guideway from behind, in the locking position of the clamping lock the guide strip put on a U-shaped profile section of the slide (21) being placed at the guide surface (11) by means of an eccentric disk (41) or the curved locking edge (45) thereof, characterized in that the slide has a breaking-through (26) for an insert of a lock (50) associated with the eccentric disk (41), the lock insert consisting of a pressure element (53) inserted in the breaking-through (26) and of an upper part (52) projecting into the path of motion of the eccentric disk (41).

2. A device according to claim 1, characterized in that the breaking-through (26) is developed as central groove in the crosspiece (22) of the slide (21).

3. A device according to claim 1, characterized in that the upper part (52) of the insert of the lock (50) partially extends over the edge of the breaking-through (26) and that areas of the upper part (52) extending over this edge rest on the crosspiece (22) of the slide (21) in the locking position of the clamping lock (20).

4. A device according to any of claims 1 to 3, characterized in that the inside width (q) of the slide (21) is greater by a dimension (h) that the distance (b) between the longitudinal edges (10) of the sectional rail ($3_a$) encompassed by it, permitting a clearance of the clamping lock (60) for lifting off laterally.

5. A device according to any of claims 1 to 4, characterized in that the installation plane of the sectional rail (3, $3_a$) is determined by sides (12) of two angled pieces (8) forming one piece with the center strip (6) and being directed in opposed direction from each other and that both sides (9, 12) of each angled piece limit a lateral groove (14) which is limited on one side by the guide surface.

6. A device according to at least one of claims 1 to 5, in which the eccentric disk (41) is part of a stop lever (40) and is placed with the latter between base crosspieces (29) of angle- and U-sections (30) of the slide (31), characterized in that the base crosspieces (29) are frontally connected by means of projections (34) or tongues (35).

**Revendications**

1. Dispositif pour bréler ou fixer des marchandises ou autres choses semblables se trouvant sur une plateforme de chargement, avec un rail profilé (3) notamment en métal léger, pour l'installation dans des compartiments à marchandises ou des conteneurs comme glissière pour un organe de retenue déplaçable au rail profilé et formé en collier de serrage (20), le rail profilé présentant une glissière (15) pour un glissoir (21) du collier de serrage (20) et au moins une surface de guidage (11) pour une bande de guidage (24) du collier de serrage (20) saisissant celle-ci par l'arrière, dans la position de fermeture du collier de serrage la bande de guidage mise à un profil en travers à U du glissoir (21) étant plaçé à la surface de guidage (11) moyennant une disque de l'excentrique (41) ou plutôt l'arête de serrage courbé (45) de celle-ci, caractérisé en ce que le glissoir présente un percement (26) pour un insert de verrou (50) destiné à la disque de l'excentrique (41), qui est composé d'un élément de pression (53) inséré dans le percement (26) et d'une partie supérieure (52) se dressant dans la trajectoire de la disque de l'excentrique (41).

2. Dispositif selon la revendication 1, caractérisé en ce que le percement (26) est formé en rainure centrale dans la traverse (22) du glissoir (21).

3. Dispositif selon la revendication 1, caractérisé en ce que la partie supérieure (52) de l'insert de verrou (50) recouvre partiellement l'arête du percement (26) et que des zones de la partie supérieure (52) recouvrant cette arête reposent sur la traverse (22) du glissoir (21) dans la position de fermeture du collier de serrage (20).

4. Dispositif selon une des revendications 1 à 3, caractérisé en ce que la largeur intérieure (q) du glissoir (21) est plus élevé d'une grandeur (h) que la distance (b) entre les arêtes longitudinales (10) du rail profilé (3a) qu'il enveloppe, ce que permet un jeu du collier de serrage (60) pour un enlèvement latéral.

5. Dispositif selon une des revendications 1 à 4 caractérisé en ce que le plan d'installation du rail profilé (3, $3_a$) est determiné par des côtés (12) de deux pièces coudées (8) faisant partie de la bande centrale (6) et dirigées en sens inverse l'une par rapport à l'autre et que les deux côtés (9, 12) de chaque pièce coudée limitent une rainure latérale (14) qui est limitée d'un côté de la surface de guidage (11).

6. Dispositif selon au moins une des revendications 1 à 5 dont la disque de l'excentrique (41) fait partie d'un levier d'arrêt (40) et est posée avec celui-ci entre des traverses de socle (29) de profilés à U ou des cornières (30) caractérisé en ce que les traverses de socle (29) sont liées sur la face par des pièces en saillie (34) ou des lanques (35).

0159394

**Fig.6**

**Fig.1**

**Fig.2**

Fig.5

Fig.3

Fig.4

# Fig.7

# Fig.8

9